(19) Europäisches Patentamt / European Patent Office / Office européen des brevets

(11) **EP 1 882 153 B1**

(12) **EUROPÄISCHE PATENTSCHRIFT**

(45) Veröffentlichungstag und Bekanntmachung des Hinweises auf die Patenterteilung:
**03.03.2010 Patentblatt 2010/09**

(21) Anmeldenummer: **06722852.8**

(22) Anmeldetag: **10.05.2006**

(51) Int Cl.:
*G01B 11/02* (2006.01)    *G01B 11/24* (2006.01)

(86) Internationale Anmeldenummer:
**PCT/DE2006/000800**

(87) Internationale Veröffentlichungsnummer:
**WO 2006/122519 (23.11.2006 Gazette 2006/47)**

(54) **VORRICHTUNG UND VERFAHREN ZUM VERMESSEN VON OBERFLÄCHEN**

DEVICE AND METHOD FOR MEASURING SURFACES

DISPOSITIF ET PROCEDE POUR MESURER DES SURFACES

(84) Benannte Vertragsstaaten:
**DE FR GB**

(30) Priorität: **17.05.2005 DE 102005023351**

(43) Veröffentlichungstag der Anmeldung:
**30.01.2008 Patentblatt 2008/05**

(73) Patentinhaber:
- **Micro-Epsilon Messtechnik GmbH & Co. KG**
  **94496 Ortenburg (DE)**
- **GRINTECH GmbH**
  **07745 Jena (DE)**

(72) Erfinder:
- **STAUTMEISTER, Torsten**
  **01109 Dresden (DE)**
- **MESSERSCHMIDT, Bernhard**
  **07749 Jena (DE)**
- **WISSPEINTER, Karl**
  **94496 Ortenburg (DE)**

(74) Vertreter: **Ullrich & Naumann**
**Patent-und Rechtsanwälte**
**Luisenstrasse 14**
**69115 Heidelberg (DE)**

(56) Entgegenhaltungen:
EP-A- 1 398 597    WO-A-2005/121700
US-A- 5 785 651    US-B1- 6 208 465
US-B1- 6 674 572

- **JIUBIN TAN, JIE ZHANG: "Differential confocal optical system using gradient-index lenses" OPTICAL ENGINEERING, Bd. 42, Nr. 10, Oktober 2003 (2003-10), Seiten 2868-2871, XP002392553**
- **HASMAN E ET AL: "COLOR-CODED OPTICAL PROFILOMETRY WITH >106 RESOLVED DEPTH STEPS" APPLIED OPTICS, OSA, OPTICAL SOCIETY OF AMERICA, WASHINGTON, DC, US, Bd. 40, Nr. 10, 1. April 2001 (2001-04-01), Seiten 1609-1616, XP001065994 ISSN: 0003-6935**

**EP 1 882 153 B1**

**Beschreibung**

Die Erfindung betrifft eine Vorrichtung zum Vermessen von Oberflächen und ein Verfahren zum Betreiben der Vorrichtung, wobei die Vorrichtung eine Lichtquelle zum Erzeugen eines Mehrfarbenlichtstrahls aufweist, wobei der Lichtstrahl durch eine Abbildungsoptik unter Ausnutzung der chromatischen Aberration von Optiken auf mehrere unterschiedlich weit von der Abbildungsoptik beabstandete Punkte fokussierbar ist, wobei der fokussierte Lichtstrahl auf die Oberfläche lenkbar ist, wobei eine Sensorvorrichtung zum Detektieren des reflektierten Lichtstrahls vorgesehen ist und wobei die Abbildungsoptik eine Optik zum gezielten Herbeiführen einer chromatischen Aberration und eine weitere Optik zum Beeinflussen des Strahlengangs des aus der Abbildungsoptik austretenden, fokussierten Lichtstrahls aufweist.

In vielen Bereichen der Technik ist es wichtig, genauere Kenntnisse über die Beschaffenheit von Oberflächen zu besitzen. Grate oder eine Welligkeit der Oberfläche, die bei der Herstellung von Objekten entstehen können, sind bei manchen Anwendungen nur in sehr engen Grenzen tolerierbar. Insbesondere bei hoch präziser Mechanik mit beweglichen Teilen kann eine nicht hinreichende Oberflächenqualität zu Fehlfunktionen oder zu einer raschen Zerstörung führen. Neben dem Gewinnen von Informationen über die Qualität der Oberfläche wird in manchen Bereichen ein genaues Vermessen von Strukturen in einer Oberfläche benötigt. So ist es bei manchen Anwendungen beispielsweise von Interesse, die Tiefe und die Position von Fräsungen oder Bohrungen in einem Werkstück zu kennen.

Aus der Praxis sind verschiedene Verfahren zum Vermessen von Oberflächen bekannt. Bei einem möglichen Verfahren werden zwei oder mehrere Kameras eingesetzt, mit denen über eine Triangulation Informationen über die dreidimensionale Beschaffenheit der Oberfläche berechnet werden. Allerdings lassen sich mit derartigen Messsystemen nur sehr beschränkte Messgenauigkeiten erzielen.

Bei einem anderen aus der Praxis bekannten Verfahren wird ein monochromatischer Lichtstrahl auf eine zu untersuchende Oberfläche gelenkt, wobei der Lichtstrahl immer auf die Oberfläche fokussiert gehalten wird. Ändert sich in Folge von Unebenheiten der Oberfläche der Abstand zwischen der Optik und dem beleuchteten Bildpunkt und ist somit der Lichtstrahl nicht mehr auf die Oberfläche fokussiert, so regelt eine automatische Fokussierungsschaltung die Optik derart nach, dass der Lichtstrahl wieder auf die Oberfläche fokussiert ist. Über das Maß der Nachregelung der Optik kann auf die Abstandsänderung geschlossen werden. Auf diese Weise lässt sich die Oberfläche relativ präzise vermessen, allerdings wird durch das notwendige Nachregeln der Optik die Messgeschwindigkeit stark eingeschränkt. Eine Vermessung der Oberfläche in einem laufenden Produktionsprozess ist damit nicht realisierbar.

Zur Vermeidung dieser Nachregelung ist ein Verfahren bekannt, mit dem durch den Einsatz von Mehrfarbenlicht (meist Weißlicht) und unter Ausnutzung der chromatischen Aberration Oberflächen vermessen werden können. Dabei wird ausgenutzt, dass der Brennpunkt von Abbildungsoptiken von der Wellenlänge des Lichts abhängt. Fällt ein derart auf mehrere Brennpunkte fokussierter Lichtstrahl auf eine Oberfläche, so wird der Lichtstrahl von dieser reflektiert. Über eine Blendeneinrichtung oder eine Glasfaser werden die spektralen Anteile im Wesentlichen unterdrückt oder ausgeblendet, deren Brennpunkt bei der Reflektion nicht im Bereich der Oberfläche lag. Dadurch kann durch eine spektrale Analyse des derart aufbereiteten Lichtstrahls auf die Entfernung der Optik von dem beleuchteten Punkt der Oberfläche geschlossen werden. Hierbei lassen sich zwar relativ große Messgeschwindigkeiten erzielen, allerdings unterliegt der Abstand zwischen Optik und Messobjekt sehr starken Einschränkungen. Beim Einsatz von Linsen mit sehr kurzen Brennweiten ergibt sich zwar bei einer Abstandsänderung zur Oberfläche des zu vermessenden Objekts eine relativ starke Verschiebung im detektierten Spektrum und somit eine relativ große Messgenauigkeit bzw. Auflösung, allerdings reduziert sich der erreichbare Messabstand - also der Abstand zwischen Sensor und zu vermessendem Objekt - erheblich. Werden Linsen mit einer größeren Brennweite eingesetzt, können zwar größere Messabstände und Messbereiche erzielt werden, allerdings sinkt die Messgenauigkeit bzw. Auflösung der Anordnung erheblich.

Aus der US 6,208,465 B1 ist ein Verfahren und eine Anordnung bekannt, mit der zwei- und dreidimensionale Objekte beleuchtet und abgebildet werden können. Dabei kommt eine Linse zum Einsatz, die eine starke chromatische Abberation hervorruft. In einer Ausführungsform sind der Unse zwei rotierende optische Keile nachgeordnet, die die Abstrahlrichtung der Anordnung beeinflussen.

Der vorliegenden Erfindung liegt daher die Aufgabe zugrunde, eine Vorrichtung der Eingangs genannten Art derart auszugestalten und weiterzubilden, dass eine hochauflösende, möglichst schnelle und einfache Vermessung von Oberflächen bei gleichzeitig möglichst großem Abstand zwischen der Optik und dem Messobjekt und einfachster Konstruktion der Messvorrichtung realisiert werden kann. Des Weiteren soll ein entsprechendes Verfahren angegeben werden.

Erfindungsgemäß wird die voranstehende Aufgabe durch die Merkmale des Patentanspruches 1 gelöst. Danach ist die in Rede stehende Vorrichtung derart ausgestaltet, dass die Optik zum gezielten Herbeiführen einer chromatischen Abberation eine GRIN (Gradient Index)-Linse umfasst.

In verfahrenstechnischer Hinsicht wird die voranstehende Aufgabe durch die Merkmale des Patentanspruchs 18 gelöst. Danach ist das in Rede stehende Verfahren dadurch gekennzeichnet, dass die chromatische Abberation in der Optik durch eine GRIN (Gradient Index)-Linse herbeigeführt wird.

In erfindungsgemäßer Weise ist zunächst erkannt worden, dass zum Erreichen einer möglichst großen Auflösung und eines möglichst großen Messabstands nicht notwendigerweise eine gekoppelte Lösung beider Probleme durchgeführt werden muss. Das heißt, dass eine Erhöhung der Auflösung, also eine Steigerung der chromatischen Aberration auch ohne Reduzierung des Messabstands möglich ist und umgekehrt. Erfindungsgemäß ist ferner erkannt worden, dass die beiden Problemstellungen dadurch entkoppelt werden können, dass die Abbildungsoptik aus zwei unabhängig voneinander optimierbaren Optiken aufgebaut ist. Erfindungsgemäß besteht die Abbildungsoptik deshalb aus einer Optik zum gezielten Herbeiführen der chromatischen Aberration und aus einer weiteren Optik zum Beeinflussen des Strahlengangs des aus der Abbildungsoptik austretenden Lichtstrahls. Dadurch lässt sich besonders einfach und unabhängig voneinander mittels der ersten Optik eine starke chromatische Aberration herbeiführen, während durch die zweite Optik die Fokussierung des Lichtstrahls beeinflussbar ist. Im Ergebnis lässt sich somit ein fokussierter Lichtstrahl erzeugen, der eine große chromatische Aufspaltung$^c$ der Fokus- bzw. Brennpunktlagen aufweist und gleichzeitig auf ein relativ weit von der Abbildungsoptik entfernt liegenden Punkt fokussiert ist. Soll zudem eine möglichst kompakte Optik des Sensors erreicht werden, so kann die chromatische Aberration gezielt durch eine besonders kleine erste Optik herbeigeführt werden. Die zweite Optik kann dann dazu genutzt werden, um eine hohe Divergenz und eine hohe numerische Apertur und somit ein hohes Auflösungsvermögen bei gleichzeitig großen Messabständen herbeizuführen. Lediglich die zweiten Optik muss daher eine entsprechende Größe aufweisen, während die erste Optik relativ beliebig miniaturisiert werden kann.

Zum Erreichen einer besonders großen chromatischen Aberration lässt sich erfindungsgemäß die erste Optik durch eine GRIN (gradient index)-Linse realisieren. GRIN-Linsen besitzen einen relativ beliebigen geometrischen Aufbau und zeichnen sich durch einen verlauf des Brechungsindexes senkrecht zu der Ausbreitungsrichtung des Lichtstrahls aus. Meist sind GRIN-Linsen zylinderförmig aufgebaut, wobei die Lichtstrahlen an den Grund- und Deckflächen des Zylinders ein- bzw. austreten.

Vorzugsweise wird bei der erfindungsgemäßen Vorrichtung mindestens eine 1.0 Pitch-GRIN-Linse eingesetzt. Das bedeutet, dass ein monochromatischer Lichtstrahl im Innern der Linse eine Periode einer Sinusschwingung beschreibt. Dazu müssen der Verlauf des Brechungsindex und die Länge der Linse auf einander abgestimmt sein. Bei einem Mehrfarbenlichtstrahl wird zur Dimensionierung der Linse ein bestimmter spektraler Anteil des Lichtstrahls, meist die mittlere Wellenlänge des Spektrums des Lichtstrahls, verwendet.

GRIN-Linsen besitzen die Eigenschaft, dass die chromatische Aberration mit zunehmender Länge größer wird. Während ein Lichtstrahl eine GRIN-Linse durchläuft, entstehen immer wieder an Fokuspunkten in der Linse Zwischenbilder, wobei jedes Zwischenbild eine größere Aufspaltung der spektralen Anteile aufweist als das vorhergehende. Dieser Effekt könnte dahingehend genutzt werden, dass zur Erzeugung einer besonders starken Aberration eine größere als eine 1.0 Pitch-GRIN-Linse eingesetzt wird, d.h. eine GRIN-Linse, in deren Innern der Lichtstrahl mehr als eine Sinusschwingung beschreibt. Vorzugsweise kommen Linsen zum Einsatz, deren Linsenlänge ein Vielfaches einer halben Periode (0.5 Pitch) ausweisen. Damit kann die longitudinale chromatische Aberration skaliert werden, ohne dass andere optische Parameter, wie Abbildungsmaastäbe oder Brennweiten des Gesamtsystems, verändert werden. In Abhängigkeit der Anforderungen an die gesamte Vorrichtung ist jedoch auch der Einsatz anderer, relativ beliebiger Längen der GRIN-Linse denkbar. Zum Beeinflussen des Grundabstands (minimaler Messabstand) oder des Messbereichs der Sensorvorrichtung könnte der GRIN-Linse eine Stellvorrichtung zugeordnet sein, mit der der Abstand zwischen der GRIN-Linse und einer Glasfaser oder einer Blendeeinrichtung festgelegt werden kann. Diese Stellvorrichtung könnte zum einen eine feste Länge aufweisen und somit die Funktion eines Abstandshalters einnehmen. Zum anderen könnte sie mit variabler Länge ausgestaltet sein. Eine Stellvorrichtung fester Länge könnte aus Glas oder einem transparenten Kunststoff aufgebaut sein, eine Stellvorrichtung variabler Länge könnte ein Luftspalt oder ein Gel und eine geeignete verstellbare Halteeinrichtung umfassen. Es sind jedoch sämtliche geeigneten und aus der Praxis bekannten Verfahren und Vorrichtungen einsetzbar.

In einer besonders bevorzugten Ausgestaltung der Erfindung ist der ersten Optik eine Vorrichtung zum Beeinflussen der chromatischen Aberration dieser Optik zugeordnet. Dazu sind alle aus der Praxis bekannten Verfahren anwendbar.

Vorteilhafterweise lässt sich die zweite Optik durch ein Linsensystem, vorzugsweise eine Teleskopoptik, mit mindestens einer Linse aufbauen, wobei vorzugsweise eine oder mehrere asphärische Linsen zum Einsatz kommen. Dabei ist es denkbar, dass beim Einsatz von mehreren Linsen mindestens zwei Linsen die gleiche Brennweite aufweisen oder aber alle Linsen unterschiedliche Brennweiten besitzen. Mittels der zweiten Optik kann eine 1:1-Abbildung realisiert sein, aber auch vergrößernde oder verkleinernde Abbildungen wären denkbar. In Abhängigkeit von der Art der Abbildung liegen die Messbereiche bzw. die Grundabstände näher an der Optik oder sind weiter von dieser entfernt.

Hinsichtlich eines besonders variablen Einsatzes der erfindungsgemäßen Vorrichtung könnte durch Austauschbarkeit einer der Linsen der Optik eine Veränderung des Messbereichs erreicht werden.

Bei Bedarf könnte zwischen zwei Linsen der Optik eine Vorrichtung zum Umlenken des Lichtstrahls eingesetzt werden. Dadurch lässt sich die Vorrichtung in vorteilhafter Weise an besondere geometrische Gegebenheiten anpassen. Dazu könnte beispielsweise eine Glasfaser, ein Prisma oder eine Prismenoptik mit mehreren Prismen und Abstandsstücken zum Einsatz kommen. Diese Vorrichtung zum Umlenken des Lichtstrahls könnte jedoch auch der ersten Optik zugeordnet werden oder zwischen der ersten und der zweiten Optik angeordnet sein.

Alternativ oder zusätzlich könnte auch der aus der Abbildungsoptik austretende Lichtstrahl durch eine Umlenkvorrichtung gelenkt werden. In diesem Fall würde der Lichtstrahl auf die Oberfläche gelenkt. Dazu könnten Prismen, Spiegel, planparallele Platten oder andere aus der Praxis bekannte richtungsändernde Vorrichtungen vorgesehen sein. Zum Steuern des Lichtstrahls an eine bestimmte Stelle der Oberfläche und zum Erreichen einer möglichst umfassenden Abdeckung der zu vermessenden Fläche könnte die Umlenkvorrichtung oder zumindest Teile davon in eine zwei- oder dreidimensionale Bewegung versetzbar ausgestaltet sein. Dabei können Dreh- oder Kippbewegungen um verschiedene Achsen, lineare Bewegungen mit verschiedenen Bewegungsrichtungen oder Kombinationen daraus zum Einsatz kommen.

Hinsichtlich einer möglichst guten Reproduzierbarkeit einer Messung könnten die Bewegungen der Umlenkvorrichtung durch elektrische Stellelemente vorgenommen werden. Diese Stellelemente könnten durch eine elektronische Vorrichtung, vorzugsweise einen Mikrocontroller oder einen anderen Digitalrechner, gesteuert werden.

Der an der Oberfläche reflektierte und durch die Blendeneinrichtung oder die Glasfaser aufbereitete Lichtstrahl ließe sich schließlich einer Sensorvorrichtung zum Detektieren dieses Lichtstrahls zuführen. Durch eine weitere elektronische Schaltung, vorzugsweise einen Mikrocontroller oder einen anderen Digitalrechner, könnte aus dem Spektrum des empfangenen Lichtstrahls eine Entfernung zwischen dem Messobjekt und der Optik berechnet werden. Die dazu notwendigen Referenzdaten, also die Zuordnungen zwischen Wellenlängen und Abständen, könnte vor Inbetriebnahme der Vorrichtung durch Kalibrierungsmessungen bestimmt und der elektronischen Vorrichtung zur Verfügung gestellt werden.

In besonders vorteilhafter Weise lässt sich durch den Einsatz einer GRIN-Linse in Verbindung mit einer weiteren Optik eine Abbildungsoptik aufbauen, die relativ frei parametrierbar und sehr stark miniaturisierbar ist. Dadurch können Messköpfe mit sehr kleinen Durchmessern realisiert werden.

Durch eine Anordnung von mehreren erfindungsgemäßen, vorzugsweise sehr stark miniaturisierten Abbildungsoptiken oder durch Einsatz eines Strahlteilers lässt sich auf einfache Weise ein Flächensensor aufbauen. Dadurch lassen sich mehrere Messungen gleichzeitig durchführen. Je nach Anforderungen und Gestaltung des Flächensensors können die Messpunkte auf verschiedenen Kurven, beispielsweise einem Geradenstück, einem Kreisausschnitt oder einem Ausschnitt einer Hyperbel, liegen. Ebenso wäre der Aufbau eines zweidimensionalen, beispielsweise rechteckigen Arrays denkbar.

Durch die Fokussierung des Lichtstrahls auf eine Reihe von Punkten unter Ausnutzung der chromatischen Aberration und durch die Vergrößerung des Messabstands und -bereichs können in vorteilhafter Weise auch Objekte vermessen werden, die mit einer Schicht aus einem transparenten Material überzogen sind. Dabei wird ein spektraler Anteil des Lichtstrahls bereits an der Grenzfläche zu der Beschichtung reflektiert, während ein weiterer Anteil an der Oberfläche selbst reflektiert wird. Dadurch können mit der Sensorvorrichtung zwei spektrale Anteile detektiert werden, die sich jeweils zwei Abständen zuordnen lassen. Aus diesen Abständen kann gleichzeitig die Beschaffenheit der Oberfläche ermittelt und mittels einer Subtraktion der beiden Werte die Dicke der Beschichtung bestimmt werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgend Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen

Fig. 1    in einer schematischen Darstellung den prinzipiellen Verlauf von Lichtstrahlen unterschiedlicher Wellenlängen durch eine erfindungsgemäße Abbildungsoptik und

Fig. 2    in einer schematischen Darstellung eine Ausgestaltung der Umlenkvorrichtung durch eine planparallele Platte.

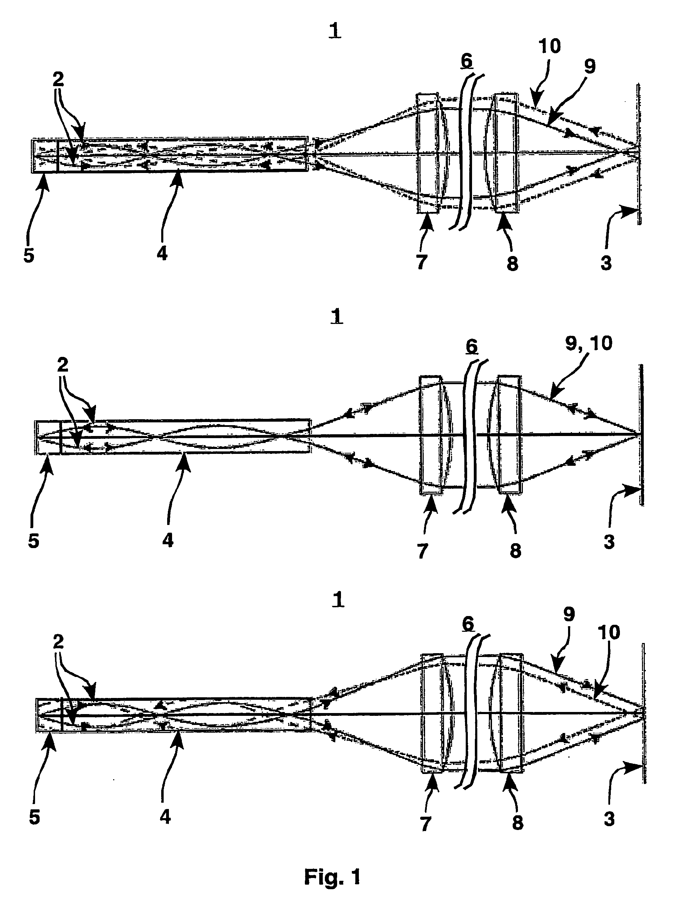

In Fig. 1 ist der Strahlengang eines Mehrfarbenlichtstrahls 2 durch die erfindungsgemäße Abbildungsoptik 1 dargestellt. Dabei zeigt der obere Teil der Figur die Ausbreitung eines kurzwelligen Anteils des Lichtstrahls 2, während im unteren Teil der Figur der Strahlengang eines langwelligen Anteils abgebildet ist. Im mittleren Teil ist der spektrale Anteil des Lichtstrahls 2 dargestellt, der exakt auf die Oberfläche 3 fokussiert ist und dessen Wellenlänge somit einen Wert annimmt, der zwischen den Werten der im oberen und unteren Teil der Figur dargestellten Anteile liegt. Der abgestrahlte und reflektierte Lichtstrahl nimmt dabei denselben Weg, lediglich in umgekehrter Richtung.

Der erste Teil der Abbildungsoptik 1 besteht aus einer GRIN-Linse 4, der eine Stellvorrichtung 5 - ein so genannter Spacer - zur Beeinflussung der Länge des optischen Systems vorgeschaltet ist. Unmittelbar an die Stellvorrichtung 5, auf der der GRIN-Linse 4 abgewandten Seite ist eine hier nicht eingezeichnete Glasfaser angeordnet, über die der Mehrfarbenlichtstrahl 2 in die Stellvorrichtung 5 und die GRIN-Linse 4 eingekoppelt und wieder ausgekoppelt wird. Der Lichtstrahl, der über die Glasfaser eingekoppelt wird und die GRIN-Linse passiert, verlässt die GRIN-Linse 4 und trifft auf den zweiten Teil 6 der Abbildungsoptik 1, der aus zwei asphärischen Linsen 7 und 8 mit gleicher Brennweite besteht.

Der fokussierte Lichtstrahl 9 verlässt die Abbildungsoptik 1, fällt auf die Oberfläche 3 und wird an dieser reflektiert. Der reflektierte Lichtstrahl 10 - in der Fig. gestrichelt eingezeichnet - durchquert die Abbildungsoptik in gleicher Weise wie der einfallende Lichtstrahl 2 und wird durch die nicht eingezeichnete Glasfaser gefiltert. An geeigneter Stelle beispielsweise unter Verwendung einer optischen Weiche wird der Lichtstrahl ausgekoppelt und einer Sensorvorrichtung zugeführt. Die optische Weiche und die Sensorvorrichtung sind ebenso nicht in der Figur enthalten.

In Fig. 1 ist deutlich zu erkennen, dass der an der Oberfläche 3 reflektierte Lichtstrahl 10 die Stellvorrichtung 5 in einem unterschiedlich ausgedehnten Bereich verlässt. Befindet sich an der der GRIN-Linse abgewandten Stirnfläche eine Glasfaser, so wird lediglich der Anteil des Lichtstrahls gut in die Faser eingekoppelt, dessen Fokus an der Kopplungsstelle zwischen Stellvorrichtung 5 und Glasfaser liegt. Dies trifft genau für die spektralen Anteile zu, die auf die Oberfläche 3 fokussiert waren. Dadurch werden durch die Sensorvorrichtung im Wesentlichen die spektralen Anteile detektiert, die auf die Oberfläche fokussiert sind.

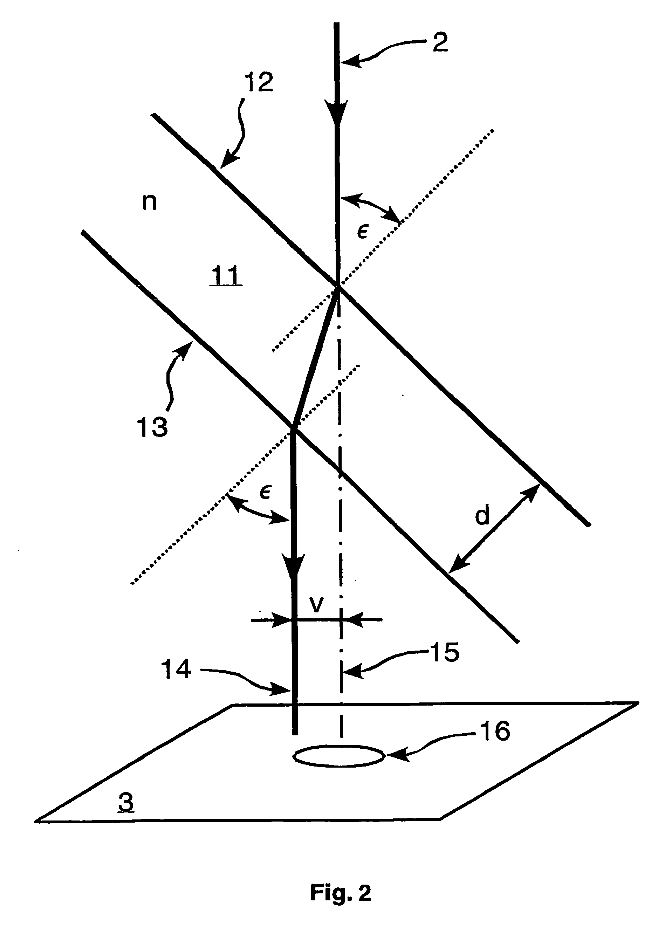

Fig. 2 zeigt eine Ausgestaltung der Umlenkvorrichtung durch eine planparallele Platte 11, die den Einsatz der erfindungsgemäßen Vorrichtung als Oberflächenscanner ermöglicht. Auf die schräggestellte planparallele Platte 11 fällt ein Lichtstrahl 2, der an den Grenzflächen 12 und 13 in Folge des gegenüber der Umgebung erhöhten Brechungsindexes n gebrochen wird. Dadurch ergibt sich für den Lichtstrahl eine Parallelverschiebung v, die von der Dicke d und dem Berechungsindex n der planparallelen Platte 11 und dem Einfallswinkel ε des einfallenden Lichtstrahls 2 abhängt. Die Verschiebung v kann durch:

$$v = d \cdot \sin\varepsilon \cdot \left(1 - \frac{\cos\varepsilon}{\sqrt{n^2 - \sin^2\varepsilon}}\right)$$

aus dem Brechungsgesetz und geometrischen Überlegungen berechnet werden.

Wird die planparallele Platte 11 um die Achse 15 rotiert, so beschreibt der parallel verschobene Lichtstrahl 14 einen Kreis 16 auf der Oberfläche 3. Wird zusätzlich der Winkel ε, d. h. der Neigungswinkel der planparallelen Platte 11 beeinflusst, so verändert sich der Radius des Kreises 16. Die Oberfläche 3 kann damit kreisförmig abgetastet werden. Wird die planparallele Platte 11 lediglich in ihrem Neigungswinkel verändert, so kann die Oberfläche 3 linienförmig abgetastet werden.

## Patentansprüche

1. Vorrichtung zum Vermessen von Oberflächen, wobei die Vorrichtung eine Lichtquelle zum Erzeugen eines Mehrfarbenlichtstrahls (2) aufweist, wobei der Lichtstrahl (2) durch eine Abbildungsoptik (1) unter Ausnutzung der chromatischen Aberration von Optiken auf mehrere unterschiedlich weit von der Abbildungsoptik (1) beabstandete Punkte fokussierbar ist, wobei der fokussierte Lichtstrahl (9) auf die Oberfläche (3) lenkbar ist, wobei eine Sensorvorrichtung zum Detektieren des reflektierten Lichtstrahls (10) vorgesehen ist und wobei die Abbildungsoptik (1) eine Optik (4) zum gezielten Herbeiführen einer chromatischen Aberration und eine weitere Optik (6) zum Beeinflussen des Strahlengangs des aus der Abbildungsoptik (1) austretenden, fokussierten Lichtstrahls (9) aufweist, **dadurch gekennzeichnet, dass** die Optik (4) zum gezielten Herbeiführen einer chromatischen Abberation eine GRIN (Gradient Index)-Linse umfasst.

2. Vorrichtung nach Anspruch 1, **dadurch gekennzeichnet, dass** der Optik (4) eine Vorrichtung zum Beeinflussen der chromatischen Aberration zugeordnet ist.

3. Vorrichtung nach Anspruch 1 oder 2, **dadurch gekennzeichnet, dass** die GRIN-Linse (4) eine Länge von größer als einer Pitch-Länge aufweist.

4. Vorrichtung nach Anspruch 3, **dadurch gekennzeichnet, dass** der GRIN-Linse (4) eine Stellvorrichtung (5) zum Beeinflussen des Abbildungsmaßstabs und/oder des Messbereichs zugeordnet ist, wobei die Stellvorrichtung (5) eine feste Länge besitzt oder in ihrer Länge beeinflussbar ist.

5. Vorrichtung nach einem der Ansprüche 1 bis 4, **dadurch gekennzeichnet, dass** die Optik (6) aus mindestens einer Linse (7, 8) aufgebaut ist, wobei die Optik (6) eine oder mehrere asphärische Linsen (7, 8) aufweisen kann.

6. Vorrichtung nach Anspruch 5, **dadurch gekennzeichnet, dass** bei einer Optik (6) mit zwei oder mehr Linsen mindestens zwei Linsen gleiche Brennweite aufweisen oder alle Linsen unterschiedliche Brennweiten besitzen, wobei mindestens eine Linse der Optik (6) austauschbar ausgestaltet sein kann.

**7.** Vorrichtung nach Anspruch 5 oder 6, **dadurch gekennzeichnet, dass** die Optik (6) eine 1: 1-Abbildung realisiert.

**8.** Vorrichtung nach einem der Ansprüche 5 bis 7, **dadurch gekennzeichnet, dass** zwischen den Linsen der Optik (6) eine Glasfaser angeordnet ist und/oder dass zwischen den Linsen der Optik (6) ein Prisma angeordnet ist.

**9.** Vorrichtung nach einem der Ansprüche 1 bis 8, **dadurch gekennzeichnet, dass** zur Lenkung des Lichtstrahls eine Umlenkvorrichtung vorgesehen ist, wobei
die Umlenkvorrichtung ein Prisma, ein Spiegel, eine planparallele Platte (11) oder andere richtungsändernde Vorrichtungen aufweist.

**10.** Vorrichtung nach Anspruch 9, **dadurch gekennzeichnet, dass** die Umlenkvorrichtung (11) vorzugsweise über elektrische Stellelemente steuerbar ist.

**11.** Verfahren zum Vermessen von Oberflächen, insbesondere unter Verwendung einer Vorrichtung nach einem der Ansprüche 1 bis 10, wobei der Lichtstrahl (2) durch eine Abbildungsoptik (1) unter Ausnutzung der chromatischen Aberration von Optiken auf mehrere unterschiedlich weit von der Abbildungsoptik beabstandeten Punkte fokussiert wird, wobei der fokussierte Lichtstrahl (9) auf einen Punkt der Oberfläche (3) gelenkt wird, wobei eine Sensorvorrichtung zum Detektieren des reflektierten Lichtstrahls (10) vorgesehen ist und wobei in der Abbildungsoptik (1) eine Optik (4) zum gezielten Herbeiführen einer chromatischen Aberration und eine weitere Optik (6) zum Beeinflussen des Strahlengangs des aus der Abbildungsoptik (1) austretenden, fokussierten Lichtstrahls (9) eingesetzt werden,
**dadurch gekennzeichnet, dass** die chromatische Abberation in der Optik (4) durch eine GRIN (Gradient Index)-Linse herbeigeführt wird.

**Claims**

**1.** Device for measuring surfaces, the device having a light source for generating a heterochromatic light beam (2), the light beam (2) being focusable by an optical imaging system (1), making use of the chromatic aberration of optical units, onto several points which are at different distances from the optical imaging system (1), the focused light beam (9) being directable onto the surface (3), a sensor device being provided to detect the reflected light beam (10) and the optical imaging system (1) having an optical unit (4) for purposively causing a chromatic aberration and a further optical unit (6) for influencing the beam path of the focused light beam (9) coming out of the optical imaging system (1), **characterised in that** the optical unit (4) comprises a GRIN (gradient index) lens for purposively causing a chromatic aberration.

**2.** Device according to claim 1, **characterised in that** a device for influencing the chromatic aberration is associated with the optical unit (4).

**3.** Device according to claim 1 or 2, **characterised in that** the GRIN lens (4) has a length greater than one pitch length.

**4.** Device according to claim 3, **characterised in that** an adjusting device (5) for influencing the imaging scale and/or the measuring range is associated with the GRIN lens (4), the adjusting device (5) having a fixed length or being influenceable in terms of its length.

**5.** Device according to any one of claims 1 to 4, **characterised in that** the optical unit (6) is made up of at least one lens (7, 8),
it being possible for the optical unit (6) to have one or more aspherical lenses (7, 8).

**6.** Device according to claim 5, **characterised in that,** in the case of an optical unit (6) having two or more lenses, at least two lenses have the same focal distance or
all of the lenses have different focal distances,
it being possible to construct at least one lens of the optical unit (6) to be replaceable.

**7.** Device according to claim 5 or 6, **characterised in that** the optical unit (6) effects 1:1 imaging.

**8.** Device according to any one of claims 5 to 7, **characterised in that** a glass fibre is arranged between the lenses of the optical unit (6) and/or
**in that** a prism is arranged between the lenses of the optical unit (6).

**9.** Device according to any one of claims 1 to 8, **characterised in that** a diverting device is provided in order to direct the light beam,
the diverting device having a prism, a mirror, a plane-parallel plate (11) or other direction-changing devices.

**10.** Device according to claim 9, **characterised in that** the diverting device (11) is preferably controllable by means of electrical adjusting members.

**11.** Method for measuring surfaces, especially using a device according to any one of claims 1 to 10, the light beam (2) being focused by an optical imaging system (1), making use of the chromatic aberration of optical units, onto several points which are at different distances from the optical imaging system, the focused light beam (9) being directed onto a point on the surface (3), a sensor device being provided to detect the reflected light beam (10) and there being used in the optical imaging system (1) an optical unit (4) for purposively causing a chromatic aberration and a further optical unit (6) for influencing the beam path of the focused light beam (9) coming out of the optical imaging system (1),

**characterised in that** the chromatic aberration in the optical unit (4) is caused by a GRIN (gradient index) lens.

## Revendications

1. Dispositif pour mesurer des surfaces, ledit dispositif comportant une source lumineuse destinée à générer un rayon lumineux polychrome (2), ledit rayon lumineux (2) pouvant être focalisé à travers une optique de reproduction (1), moyennant l'exploitation de l'aberration chromatique des optiques, sur plusieurs points situés à des distances différentes de l'optique de reproduction (1), le rayon lumineux focalisé (9) pouvant être dirigé sur la surface (3), un dispositif de capteurs destiné à détecter le rayon lumineux réfléchi (10) étant prévu et l'optique de reproduction (1) comportant une optique (4) pour produire de manière ciblée une aberration chromatique et une optique supplémentaire (6) pour influencer la trajectoire du rayon lumineux focalisé (9) sortant de l'optique de reproduction (1),

   **caractérisé en ce que** l'optique (4), destinée à produire de manière ciblée une aberration chromatique, comporte une lentille GRIN (à gradient d'indice).

2. Dispositif selon la revendication 1, **caractérisé en ce qu'**à l'optique (4) est associé un dispositif destiné à influencer l'aberration chromatique.

3. Dispositif selon la revendication 1 ou 2, **caractérisé en ce que** la lentille GRIN (4) a une longueur supérieure à une longueur pitch.

4. Dispositif selon la revendication 3, **caractérisé en ce qu'**à la lentille GRIN (4) est associé un dispositif de réglage (5) destiné à influencer l'échelle de reproduction et/ou la zone de mesure, ledit dispositif de réglage (5) ayant une longueur fixe ou pouvant être influencé dans sa longueur.

5. Dispositif selon l'une quelconque des revendications 1 à 4, **caractérisé en ce que** l'optique (6) est constituée d'au moins une lentille (7, 8), ladite optique (6) pouvant comporter une ou plusieurs lentilles (7, 8) asphériques.

6. Dispositif selon la revendication 5, **caractérisé en ce que,** en présence d'une optique (6) avec deux ou plusieurs lentilles, au moins deux lentilles ont la même distance focale ou toutes les lentilles ont des distances focales différentes, au moins une lentille de l'optique (6) étant réalisée de manière amovible.

7. Dispositif selon la revendication 5 ou 6, **caractérisé en ce que** l'optique (6) réalise une reproduction 1:1.

8. Dispositif selon l'une quelconque des revendications 5 à 7, **caractérisé en ce qu'**une fibre de verre est disposée entre les lentilles de l'optique (6) et/ou **en ce qu'**un prisme est disposé entre les lentilles de l'optique (6).

9. Dispositif selon l'une quelconque des revendications 1 à 8, **caractérisé en ce qu'**il est prévu un dispositif de déviation pour guider le rayon lumineux, ledit dispositif de déviation comportant un prisme, un miroir, une plaque (11) plane et parallèle ou d'autres dispositifs modifiant la direction.

10. Dispositif selon la revendication 9, **caractérisé en ce que** le dispositif de déviation (11) peut être commandé, de préférence, par des éléments de réglage électriques.

11. Procédé pour mesurer des surfaces, en particulier moyennant l'utilisation d'un dispositif selon l'une quelconque des revendications 1 à 10, le rayon lumineux (2) étant focalisé à travers une optique de reproduction (1), moyennant l'exploitation de l'aberration chromatique des optiques, sur plusieurs points situés à des distances différentes de l'optique de reproduction, le rayon lumineux focalisé (9) étant dirigé sur un point de la surface (3), un dispositif de capteurs destiné à détecter le rayon lumineux réfléchi (10) étant prévu et l'optique de reproduction (1) comportant une optique (4) pour produire de manière ciblée une aberration chromatique et une optique supplémentaire (6) pour influencer la trajectoire du rayon lumineux focalisé (9) sortant de l'optique de reproduction (1),

   **caractérisé en ce que** l'aberration chromatique est produite dans l'optique (4) par une lentille GRIN (à gradient d'indice).

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6208465 B1